# EUROPEAN PATENT SPECIFICATION

(11) **EP 1 469 336 B1**
(45) Date of publication and mention of the grant of the patent: **11.02.2009**
(21) Application number: 04077119.8
(22) Date of filing: 03.10.1997
(51) Int. Cl.: G02B 27/22

(54) **A stereographic viewer**
Stereo-Betrachter
Visionneuse stéréoscopique

(30) Priority: 04.10.1996 US 26761 P; 18.04.1997 US 44736 P
(43) Date of publication of application: 20.10.2004
(62) Divisional of application: 97945532.6
(73) Proprietor: Jones, Charles W., Knightstown, IN 46148 (US)
(72) Inventor: Jones, Charles W., Knightstown, IN 46148 (US)
(74) Representative: Findlay, Alice Rosemary

(56) References cited:
- US-A- 2 334 483
- US-A- 2 410 725
- US-A- 2 484 591
- US-A- 5 309 280
- US-A- 5 499 136
- PATENT ABSTRACTS OF JAPAN vol. 0122, no. 10 (P-717), 16 June 1988 (1988-06-16) -& JP 63 008624 A (TADAO KONO), 14 January 1988 (1988-01-14)

## Description

### BACKGROUND AND SUMMARY OF THE INVENTION

The present invention relates to a stereographic viewer that enables stereographic content to be conveyed and presented to the user.

Stereographic/stereoscopic devices are numerous and various in type and well-known in the art. Generally, a stereoscope is an optical instrument configured to view stereographic imagery. The primary objective of the stereoscopic/stereographic art is to provide the user with a visual medium that approximates the experience of natural human visual perception of three-dimensional space. Depth perception is a phenomenon that naturally occurs as the right and left eyes each perceive simultaneously the spatial world in parallax, from two slightly different, horizontally displaced perspective viewpoints, which the brain fuses together and interprets, providing three-dimensional perception. A stereographic image typically consists of two separate images produced in a flat, planar, two-dimensional medium. The images of corresponding left and right perspective views are appropriately positioned next to each other so that their perspective viewpoints are horizontally displaced from each other by a distance that corresponds to the average inter-pupillary distance of the left and right eyes. The two images, commonly referred to as a stereograph or a stereo-pair, when viewed with an optical viewer possessing two lenses with the appropriate optical and focal properties, enable each eye to see the corresponding image intended for it, thereby creating in the brain a perceived three-dimensional effect.

### DESCRIPTION OF THE INVENTION

The stereoscopic viewer according to claim 1, including its various adaptations as disclosed herein, has the primary objective of conveying stereographic content to the user. Further, the objective is to simulate natural human vision and to inclusively provide an immersive, full-field-of-view stereographic viewing experience to a wide audience, especially those who do not have access to expensive electronic systems.

One of the key capabilities necessary to achieve this objective is interocular adjustment. The present viewer substantially improves this capability over the previously disclosed and claimed embodiments of this inventor's work as originally filed in U.S. Pat. No. 5,499,136, wherein interocular adjustment was achieved by configuring the lenses to be adjustable to the user's individual interpupillary distance, with occluding apertures in a fixed and integral position in the viewer body. This capability is effective to a certain extent, however, it is determined that remarkably improved perception of the immersive image field can be attained by configuring the apertures which frame the left and right images to also be adjustable, to therewith enable right-stereographic content to be occluded from the left eye viewpoint and left-stereographic content to be occluded from the right-eye viewpoint, respectively.

Further, adjustable occluding apertures greatly improve the user's ability to fine-tune and thus see an immersive visual-field that simulates natural vision, with a central stereo-field bordered by left and right peripheral monocular fields. The apertures' close proximity to the user's eyes renders the perception of the shielding edges of the apertures as a soft blur. This soft blur of occlusion is actually very important, because it blends said stereo and mono fields seamlessly together, to create an immersive visual field.

It is annotated that the viewer of the present invention may be configured with any type of lens optics common to the stereoscopic art, including but not limited to the double convex, double convex wedge, plano convex, piano convex wedge, anastigmatic and any other optical lens form or arrangement of lens forms which facilitate optical utilization of the stereoscopic viewer.

### BRIEF DESCRIPTION OF THE DRAWINGS

A complete understanding of the present invention and other advantages and features thereof may be gained from a consideration of the following description of the preferred embodiments taken in conjunction with the accompanying drawings in which:
FIG. 1 is an exploded view, in perspective, illustrating the various adjustable elements of the stereoscopic viewer 5.
FIG. 2 is a sectional illustration from the point of view of the user, including the fingers of the user, indicating the adjustment and alignment features of the stereoscopic viewer 5 relative to a schematic diagram of the perceptual visual fields of the stereographic content.
FIG. 3 is a schematic diagram of the perceptual visual fields of stereographic content 1V, before visual field fusion.
FIG. 4 is a schematic diagram of the perceptual visual fields of stereographic content 1V, after visual field fusion, which corresponds to FIG. 3.
FIG. 5 is an exploded front-perspective view of viewer 5D, which is configured with adjustable occluding apertures 6E and lenses 4E.
FIG. 6 is a perspective view of elements 4M and 6D, which are variations of the adjustable lens and occluding aperture elements relative to viewer 5D in FIG. 5.
FIG. 7 is a perspective view of element 4Y, which integrates the lens 4N and occluding aperture 6L into one unit and is relative to viewer 5D in FIG. 5.
FIG. 8 is a front view of viewer 5M, which utilizes pivotal means to achieve interocular adjustment.
FIG. 9 is an exploded view, in perspective, of elements 6M, 4S and 5N relative to viewer 5M in FIG. 8.
FIG. 10 is a front view of element 4Z, which integrates the lens 4V and occluding aperture 6R into one unit, relative to viewer 5M in FIG. 8.
FIG. 11 is a frontal exploded view, in perspective, of interocular adjustment mechanism 5Q, which enables the lenses and occluding apertures to be adjusted in a synchronized manner by the user.
FIG. 12 is a frontal perspective view of mechanism 5Q, showing the components assembled and indicating the directional motion of the components when the mechanism is being adjusted to accommodate a user with narrow-set eyes.
FIG. 13 is a frontal view which closely corresponds to FIG. 12, and indicates the directional motion of the components when the mechanism is being adjusted to accommodate a user with wide-set eyes.
FIG. 14 is a frontal exploded view, in perspective, of mechanism 5U, a means to achieve synchronous interocular adjustment with a simple arrangement of gears.
FIG. 15 is a front elevation view of mechanism 5U which indicates the directional motion of the components during said adjustment.
FIG. 16 is a front elevational view of viewer 7Q, which utilizes a fulcrum and pivotal arm to achieve synchronous lense and aperture adjustment movement in a manner similar to mechanism 5Q of FIGS. 11-13, except that the adjustment means of 7Q are interposed between the lenses and apertures.
FIG. 17 is a perspective view of book 70, which portrays viewer 7Q being utilized to create a hybrid stereographic book with a reinforced fabric pivotal chassis and content support portion.
FIG. 18 is an end elevational view of the device of FIG. 39 in a storage configuration.
FIGS. 19-23 are corresponding perspective views of book 16 illustrating in sequential steps how content packet 1C can be utilized.

### DETAILED DESCRIPTION OF THE DRAWINGS

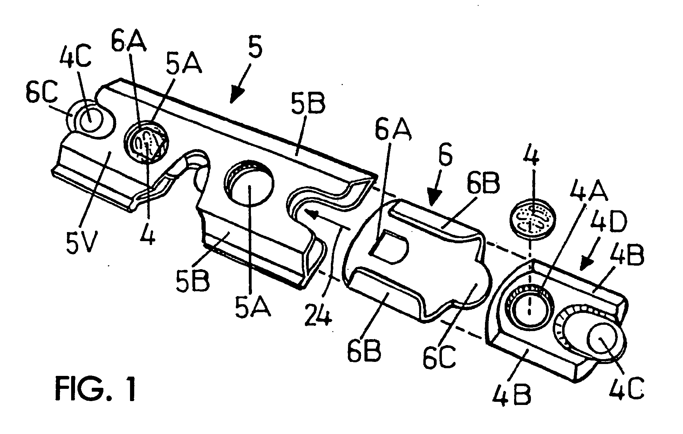

Referring to the drawings, FIG. 1 is an exploded view of viewer 5 which reveals the folded and beveled construction of viewer body 5V which includes apertures 5A. Also revealed are lens elements 4 which may be pre-existing molded plastic or glass. The exploded view reveals how right lens 4 securely engages socketed aperture 4A of lens carriage 4D, configured with bevels 4B to slidably engage occluding aperture plate 6, configured with occluding aperture 6A and corresponding bevels 6B, which also slidably engage bevels 5B of viewer body 5V as indicated by arrow 24. Slidable adjustment of lens carriages 4D and aperture plates 6 is achieved by the user grasping control tabs 4C and 6C, respectively. It should be understood that lens 4 can be rendered integrally and merged with lens carriage 4D, without changing its ability to be independently adjustable relative to aperture 6. Lens 4 may be configured to be integral and one piece with aperture 6A, however, if these two features are merged, independent adjustment between lens 4 and aperture 6A is lost.

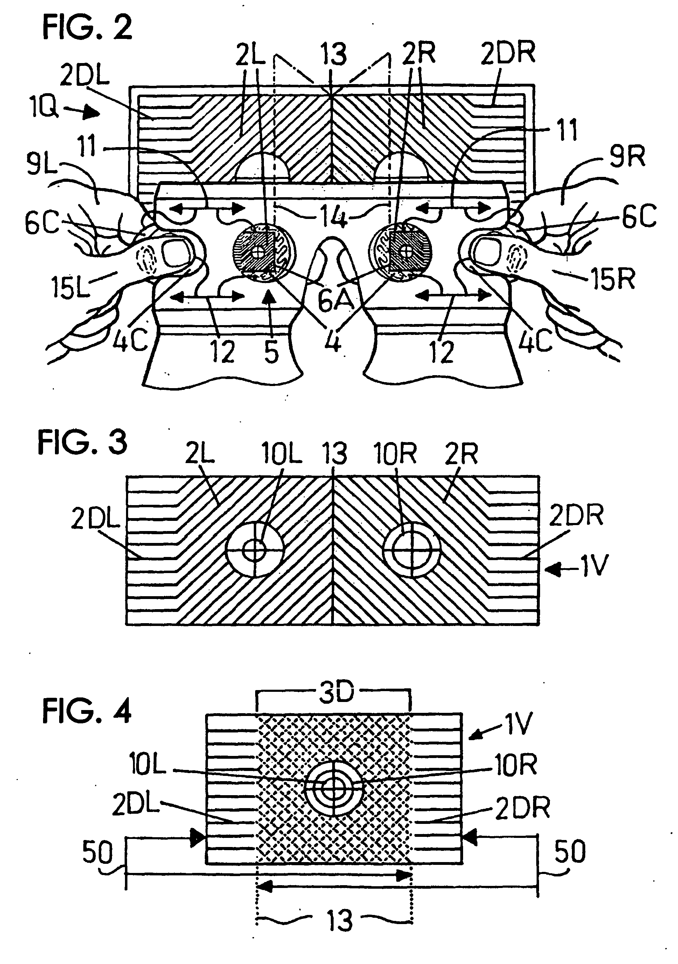

FIG. 2 is an illustration from the point of view of the user, including a schematic diagram 1Q indicating the perceptual visual fields which compose the stereographic content to be perceived by the user with viewer 5; said fields 2L and 2R as indicated by the diagonal lines will compose the central stereofield when fused in the brain of the user. The fields 2DL and 2DR, indicated with horizontal lines, will compose the left and right peripheral monocular fields, respectively, after fusion by the user. Centerline 13, where the left 2L field and the right 2R field abut, will be occluded to non-visibility; this is achieved, as represented by dotted line 14, by the user moving index fingers 9L and 9R to slide, as indicated by arrows 11, aperture control tabs 6C and therewith occluding apertures 6A so that said apertures enable each eye of the user to only see the appropriate visual fields intended for it. The procedure for adjusting the lenses of viewer 5 is similar, whereby the user moves thumbs 15L and 15R to slide, as indicated by arrows 12, lens carriage control tabs 4C and therewith lenses 4, until the targets indicated in schematic stereofields 2L and 2R successfully fuse into one target. Thus, inter-pupillary alignment with the stereographic content is achieved. This process is further revealed in FIGS. 3 and 4.

FIG. 3 is a schematic diagram which indicates the perceptual visual fields which compose the stereographic content 1V before the event of fusion by the user. Left and right stereofields 2L and 2R are schematically represented by the diagonal lines as indicated, respectively. Alignment targets 10L and 10R are represented with inner circles of a different diameter as indicated. Peripheral monofields 2DL and 2DR are represented by horizontal lines as indicated. Centerline 13 is indicated between stereofields 2L and 2R.

It is annotated that the primary objective of abutting stereofields 2L and 2R is to achieve perception of the largest stereofield possible. If a wide central border were interposed between 2L and 2R, said border would occupy space that can be utilized by the stereographic content and decrease and narrow the perceived stereofield, thus the objective of attaining an immersive visual field would be diminished. However, it should be understood that non-immersive stereographic content can also be conveyed with the present invention, for example, the perceived visual field can convey a series of 3D images, in a manner similar to comics.

FIG. 4 is a corresponding schematic diagram relative to FIGS. 2 and 3, which indicates stereographic content IV after the event of fusion by the user. Central stereofield 3D is indicated by diagonal dotted lines as bracketed. Central stereofield 3D is composed of stereofields 2L and 2R (refer to FIG. 3) which have fused, as indicated by arrows 50. Alignment targets 10L and 10R have now fused, and the inner circles of different diameters are indicated (refer to FIG. 3). Peripheral monofields 2DL and 2DR are indicated. Centerline 13 is indicated by two dotted lines, and it should be understood that centerline 13 would not be visible if it is successfully occluded. If not properly occluded, centerline 13 would occupy the areas indicated, i.e., centerline 13 would appear as two hard-edged bands containing overlapped stereographic imagery which would not fuse properly, one on each side of stereofield 3D between monofields 2DL and 2DR.

When properly occluded, centerline 13 is blocked out by apertures 6A (See FIG. 2) so that monofields 2DL and 2DR merge with stereofield 3D. This perceptual merging is greatly improved by the close proximity of apertures 6A to the user's eyes, which renders the occluding edge of each aperture 6A as a soft blur, which aids in seamlessly blending the stereofield 3D and monofields 2DL and 2DR together.

When the apertures 6A are adjustable to the user's exact visual requirements said field merging effect is virtually indistinguishable from natural visual perception.

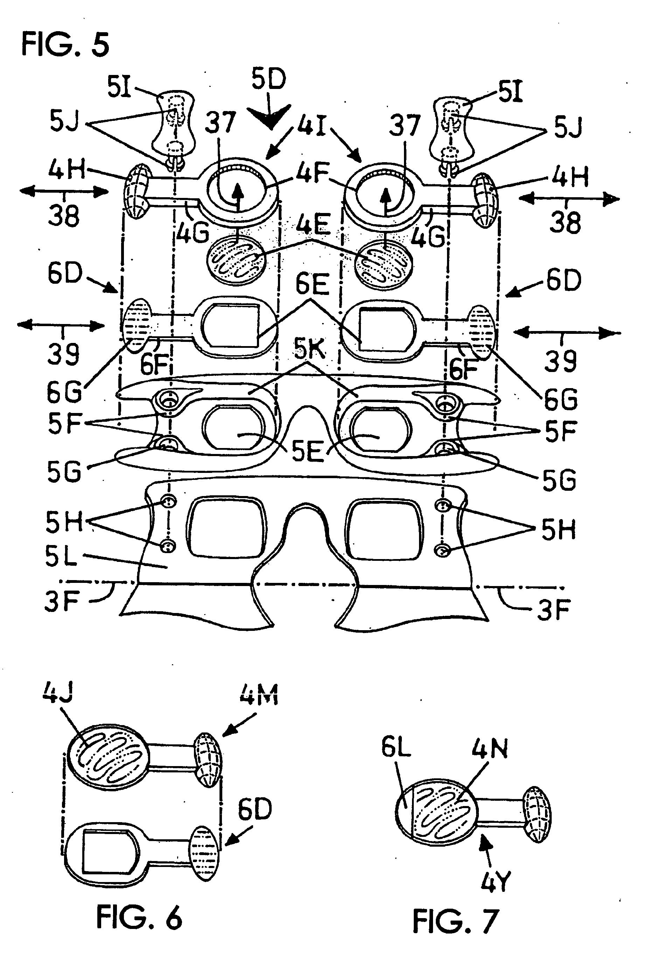

FIG. 5 is an exploded, sectional, front-perspective view of stereoscopic viewer 5D, which is configured with adjustable occluding aperture units 6D and adjustable lens units 41, and is adaptable to the embodiments contemplated herein, whereby the entire arrangement of the viewer 5D components can snap thereon to chassis plate 5L, that includes axis 3F, therewith holes 5H which are of a diameter to securely engage the snap studs 5J of bridgepiece 51, said studs 5J also engage viewer body holes 5G, two of which are indicated. Lenses 4E engage into snap rim 4F as indicated by arrow 37. The aperture units 6D and lens units 41 nest together in a parallel plane in viewer eyepiece wells 5K so that lenses 4E, apertures 6E are adjustably aligned with viewer apertures 5E. The beveled surfaces 4G and 6F of the lens units 41 and aperture units 6D, respectively, slidably fit in the channel indicated by 5F. Adjustment handles 4H of lens units 4I slidably contact surface 6G. When snapped into place, lens units 41 and aperture units 6D independently slide in the direction indicated by arrows 38 and 39, respectively.

It should be understood that said apertures and lenses in all the embodiments disclosed may be configured with other means to achieve the stated objectives of the present invention, and that, for example, the apertures could be arranged on the opposite side of the lenses so that they are closer to the user's eyes than said lenses.

FIG. 6 is an exploded view, in perspective, of one of the two lens units 4M and aperture units 6D which correspond to viewer 5D in FIG. 5, whereby the configuration of lens 4J and unit 4M are integral and merged into one piece.

Said units fit and function in the viewer 5D in the same manner as units 4I and 6D described in FIG. 5.

FIG. 7 is a perspective view of one of two lens/aperture elements 4Y, which integrates lens 4N with occluding aperture 6L to form one adjustable piece which fits into viewer 5D of FIG. 5 to fulfill the functions of a lens unit 41 and aperture unit 6D. However, it is understood that this configuration does not enable independent adjustment between said lenses and apertures.

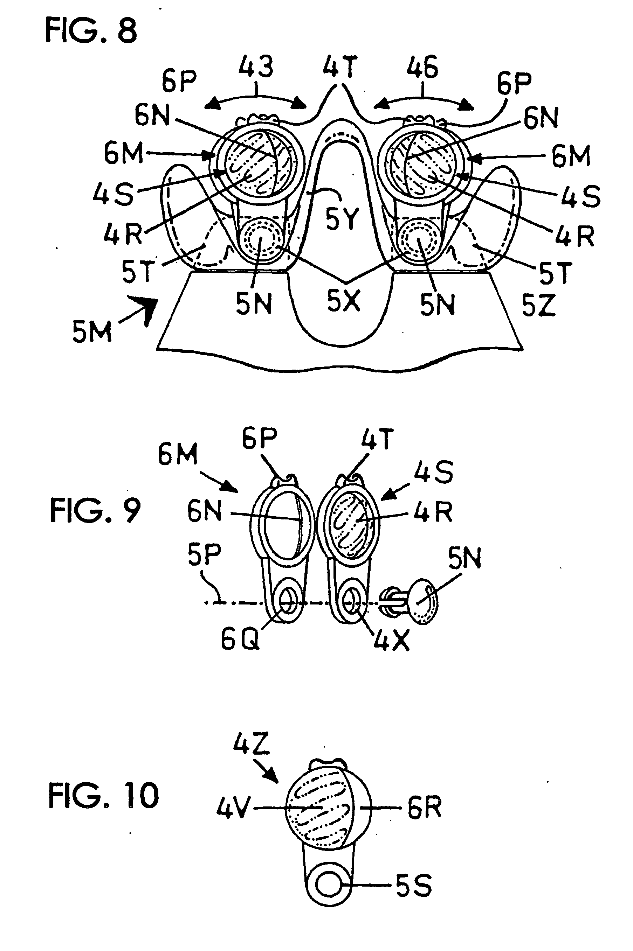

FIG. 8 is a front elevational, sectional view of stereoscopic viewer 5M, which is adaptable to the present invention, and utilizes pivotal means to achieve adjustment of the lenses 4R and occluding apertures 6N, whereby the entire arrangement of viewer 5M components engage mounting plate 5T therewith mounting holes, one of which is indicated as 5Z, which are of a diameter to secure snap-studs 5N, which also engage and secure viewer body 5Y, therewith mounting holes, one of which is indicated as 5X. Snap-studs 5N also pivotally couple lens units 4S and aperture units 6M together so they may pivot about axes determined by mounting holes 5Z, 5X and stud 5N in the directions indicated by arrows 43 and 46. Pivotal adjustment of lenses 4R and apertures 6N is achieved by the user utilizing the index fingers to nudge switches 4T and 6P, respectively.

FIG. 9 is an exploded view, in perspective, which relates to viewer 5M of FIG. 8, whereby one snap-stud 5N is indicated, as are pivotal collars 6Q and 4X, of left aperture unit 6M and lens unit 4S, respectively. Pivotal axis 5P is indicated as common to said components.

FIG. 10 is a front elevational view of a left integral lens/aperture unit, 4Z, which can be utilized therewith viewer 5M of FIG. 8, whereby the lens 4V is merged and molded in one piece with occluding aperture 6R and pivotal collar 5S.

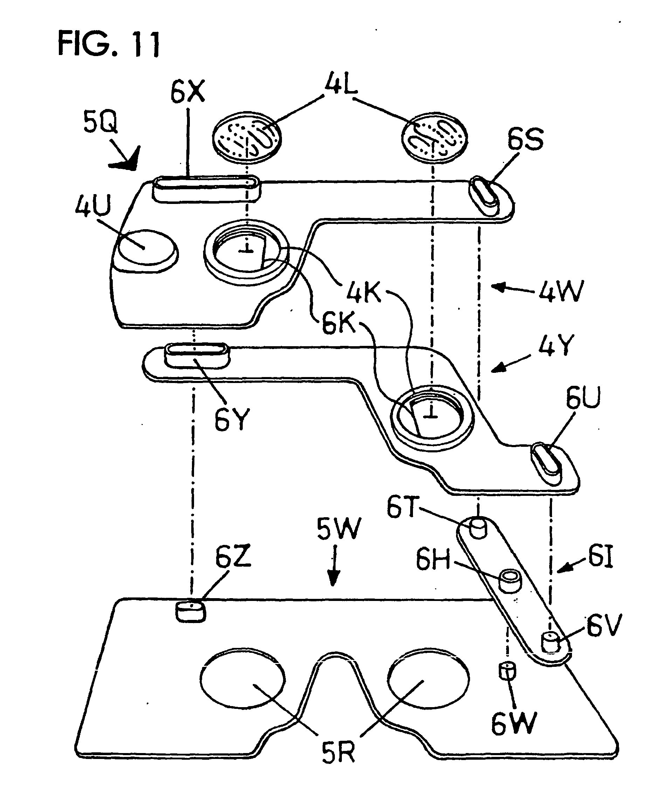

FIG. 11 is a frontal exploded view of interocular adjustment mechanism 5Q, which enables a synchronous adjustment of the eyepieces. It is annotated that the mechanism 5Q does not enable independent adjustment between the lenses and occluding apertures; however, 5Q does allow interocular adjustment to be quickly achieved by the novice stereographic book user. The mechanism depicted is configured to be mounted within a cardboard viewer body as previously shown (see FIG. 1, No. 5V), which is omitted here for purposes of clarity. The components depicted are fabricated of thin, vacuum formed and die-cut plastic, except for the lenses 4Q, which may be pre-existing injection molded plastic or glass. The components of 5Q are basically thin plastic membranes, rendered in a manner familiar to those skilled in the art. It should be understood that the components of 5Q could also be fashioned of injected-molded plastic, cardboard with rivet pivots, or stamped and die-cut aluminum. Mechanism 5Q as shown is extremely cost-effective to produce and reasonably durable.

FIG. 11 indicates how lenses 4L snap into lens sockets 4K which are diecut to form integral occluding apertures 6K which are positioned on lens carriage elements 4W and 4Y, respectively. It is understood that lenses 4L could be merged and formed integrally with said carriage elements via injection-molding. Carriage element 4W includes thumb-switch 4U which indicates a typical location the user would grasp the mechanism 5Q, between the left thumb and forefinger. Carriage element 4W also includes stabilizing channel 6X the concave underside of which slidably fits over the convex upperside of stabilizing channel 6Y of carriage unit 4Y in a manner similar to nesting cups; thus, channel 6Y then also slidably fits over stabilizing alignment pin 6Z, formed on base plate 5W. This same nesting/fitting technique is also evident in the assembly of pivotal sockets 6S and 6U of carriage units 4W and 4Y to pivotal arm pins 6T and 6V respectively, located on pivotal arm 61, which in turn, fits similarly via fulcrum pivotal socket 6H to fulcrum pin 6W, formed on base plate 5W, which also includes die-cut eyepiece apertures 5R. It is annotated that base plate 5W is aligned and secured with any number of typical fastening techniques within a viewer body such as 5V of FIG. 5. However, it should be understood that there are many other means to establish a fulcrum or stabilize the simple pivotal geometry of mechanism 5Q which may not require a base plate such as 5W. Base plate 5W is depicted for reasons of graphic clarity.

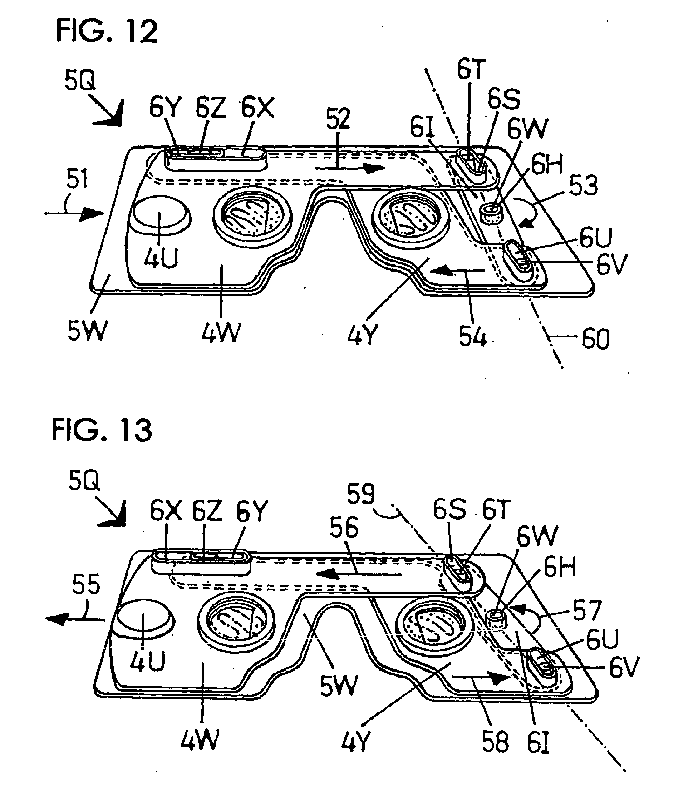

FIG. 12 depicts mechanism 5Q assembled and illustrates the directional motion of the components to adjust the eyepieces to a narrow eye setting, whereby thumb switch 4U is slid in the direction indicated by arrow 51, sliding carriage unit 4W and thus pivotal socket 6S in the same direction as arrow 52; pivotal socket 6S, which engages pivotal arm pin 6T, causing pivotal arm 6I to pivot via fulcrum pivotal socket 6H and fulcrum pin 6W in a clockwise movement as indicated by arrow 53; thus moving pivotal arm pin 6V, which engages pivotal socket 6U, causing carriage 4Y to slide in the direction indicated by arrow 54. Nested stabilizing channels 6X and 6Y and stablizing alignment pin 6Z are indicated and it is annotated that they may serve to maintain carriages 4W and 4Y in slidable alignment and also serve as a means of stopping or limiting the distance of carriage travel to an appropriate interocular adjustment range. It should be understood that this function can be achieved by other alternative means, and that the present invention is not limited to this specific depicted configuration.

FIG. 13 is a perspective view of mechanism 5Q from an identical point of view as FIG. 12, so the two Figs. can be quickly compared. FIG. 13 indicates the directional motion of the components of 5Q when it is adjusted for a wide eye setting. Arrows 55 through 58 basically indicate the same movement of the said same components as in FIG. 12 in the opposite direction. The angle of pivotal arm 6I can be seen to be stopped in a different position relative to its position in FIG. 12. This angular difference can be seen by comparing line 59 of FIG. 13 to line 60 of FIG. 12.

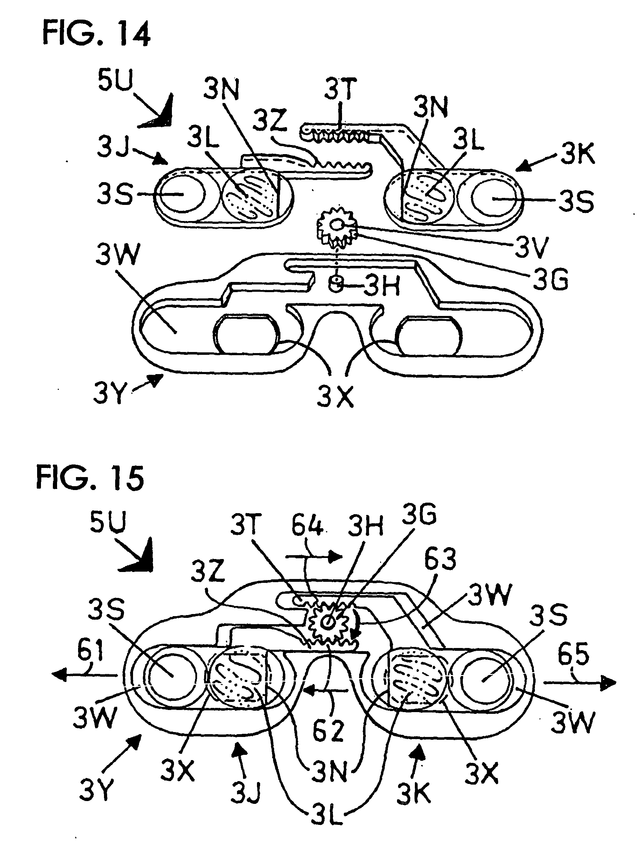

FIG. 14 illustrates yet another simple means to achieve synchronized interocular adjustment, whereby the lenses and occluding apertures are moved away or towards each other in concert by utilizing a pinion gear meshed with opposing linear gears. Exploded perspective FIG. 14 illustrates mechanism 5U, whereby clear, injection-molded eyepiece components 3J and 3K, which each are configured with lens 3L, integral occluding aperture 3N, and thumb switch 3S slidably fit into eyepiece well 3W of viewer body 3Y, which is configured with eyepiece apertures 3X and gear pivot pin 3H, which receives gear sleeve 3V of pinion gear 3G so that pinion gear 3G rotates freely in either direction, and meshes with opposing linear gears 3Z and 3T of eyepieces 3J and 3K, respectively. It is annotated that these designated components can be pivotally and slidably secured into place by any number of typical methods, for example, a capping shell which would nest over viewer body 3Y and thus maintain said movable components in the eyepiece well 3W. Also, as illustrated in FIG. 27, viewer body 3Y can be secured to a viewer pivotal chassis (or formed integrally with said same) with any number of techniques. FIG. 14 is mainly concerned with revealing mechanism 5U.

FIG. 15 is a front elevational view of mechanism 5U which corresponds with FIG. 14, and portrays the assembled components and the directional motion of said components as they are adjusted to accommodate a user with wide-set eyes. It is understood that the basic mechanical directions and motions portrayed in FIG. 15 can also occur in the opposite directions as indicated so as to achieve interocular adjustment for a narrow eye-setting.

A wide interocular adjustment is achieved when the user grasps eyepiece thumb switch 3S and slides it outward as indicated by arrows 61 and 65. It is understood that the user may grasp either the left or right thumb switch. For this sequential example, the user slides the left switch 3S in the direction indicated by arrow 61, which causes linear gear 3Z to also slide, as indicated by arrow 62, which in turn pivots pinion gear 3G in a clockwise motion around gear pivot pin 3H as indicated by arrow 63, thus driving the meshed teeth of opposing linear gear 3T in the direction indicated by arrow 64, thereby sliding eyepiece 3K in a synchronized manner away from eyepiece 3J, as indicated by arrow 65.

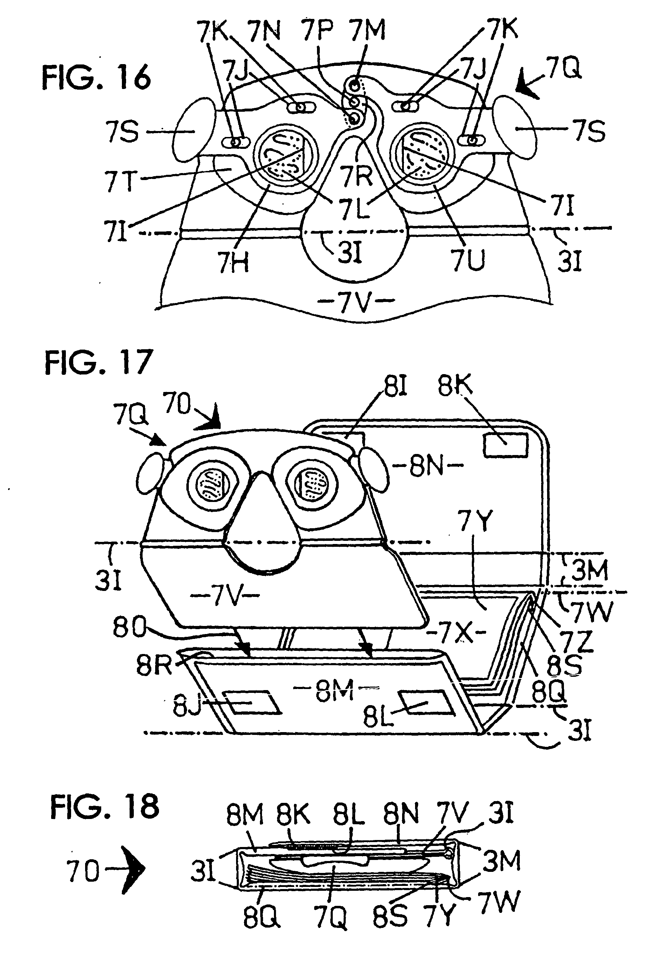

FIG. 16 illustrates viewer 7Q and how fulcrum 7P and pivotal arm 7R may be positioned between the lenses 7L and occluding apertures 71, the pivotal couplings 7N and 7M engaging corresponding means configured with lens carriages 7H and 7U, respectively. These pivotal couplings can be made in a number of techniques common to the mechanical art, nested plastic pins and sockets, rivets, etc. The lens carriages 7H and 7U may be integral with the lenses 7L and apertures 71 and may include adjustment switches 7S. The lense carriages are slidably positioned and limited in their movement by positioning apertures 7J, which slidably engage pins 7K; which are integral with base plate 7T, which also integrally includes living hinge 31 and insert plate 7V, shown in section. It is annotated that hinge 3I and plate 7V are shown as one of many possible ways to provide a corresponding means of engaging the viewer to other components of the present invention; however, the present invention should not be limited to these illustrated means. The advantage of locating the fulcrum and pivotal arm between the lenses is fairly straight forward; this enables adjustment switches 7S to be located on each side of the viewer so it may be adjusted with either hand while viewing.

FIG. 17 depicts book 70 and how 7Q may be configured with insert plate 7V to engage, as indicated by the arrows 80, sleeve 8R of viewer chassis 8M, which is constructed of fabric with rigid plates sewn within so that the device can maintain its pivotal and support functions. It is understood that once insert plate 7V is slid into position, the axes designated as 31 pivot.

The pivotal page support 8N, which includes two pivotal axes 3M, also functions as a cover flap and can be releasably secured to 8M with sewn velcro patches or other means common in the art, whereby patch 81 engages patch 8J and 8K engages 8L, respectively.

The content packet 7Y is shown in place, positioned by the packet sheet 7Z being slid into sleeve 8S on the content support portion 8Q, thus determining page pivotal axis 7W.

Stereographic content 7X is thereby positioned to be viewable.

FIG. 18 is an end view of the present invention in a folded storage mode which reveals the components of the present invention.

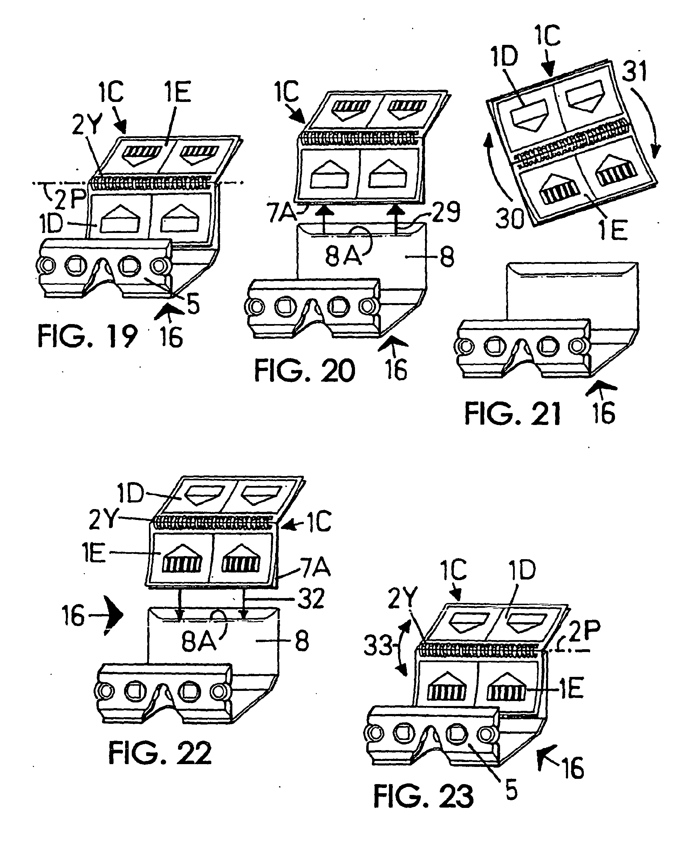

FIGS. 19 through 23 illustrate therewith corresponding perspective views of book 16 a sequential procedure for utilizing content packet 1C, which is a plurality of pages wire-bound with a conventional, well-known binding, 2Y. Page 1 D and 1 E are shown with schematic symbols to diagram the orientation of the stereographic content, whereby the arrows of 1 D are pointing upward towards page pivotal axis 2P and the striped arrows of 1 E are also oriented towards said axis 2P. FIG. 19 indicates viewer 5 in alignment to view 1 D, which is oriented correctly. It is understood that a plurality of pages can be pivotally-exposed and the stereographic content therewith would be oriented said same as indicated by 1 D, and that viewer 5 would enable the user to view said pages in sequence.

FIG. 20 shows the cover 7A of content packet 1C being slidably released from sleeve 8A of page mount/content support portion 8 as indicated by two arrows, one of which is designated as 29.

FIG. 21 portrays content packet 1C being reoriented as indicated by arrows 30 and 31, so that page 1 E is approaching upright orientation relative to book 16.

FIG. 22 illustrates 1C approaching, as indicated by arrow 32, slidable engagement with sleeve 8A of page mount/content support portion 8 of book 16.

FIG. 23 portrays content packet 1C in place so that the stereographic content as diagramed with 1 E can be pivoted on page axis 2P as indicated by arrow 33, and viewed in an upright orientation with viewer 5. It is understood that the content diagrammed on the page surface 1 D is arrayed on the opposite side of the page surface diagrammed as 1 E.

Whereas the present invention is susceptible of various modifications and alternative constructions, the embodiments suggested in the drawings will herein be described in sufficient detail. It should be understood, however, it is not the intention to limit the invention to the particular forms disclosed, but to indicate the general spacial alignments and inherent geometries and thus define the functional and objective parameters of the present invention.

## Claims

1. A stereographic viewing device comprising a stereocopic viewer (5, 5D, 5M, 5Q, 5U, 7Q) configured to enable interocular adjustment, including adjustable left and right viewpoint lenses (4, 4E, 4J, 4R, 4N, 4V, 4L, 3L, 7L) and adjustable left and right viewpoint occluding apertures (6A, 6E, 6L, 6N, 6R, 6K, 3N, 7I), separate from the viewpoint lenses, respectively, the lenses and apertures being configured for viewing immersive stereographic content having a format (1V) which presents the content in four visual fields, including a left peripheral monocular field (2DL), a left binocular stereo field (2L), a right binocular stereo field (2R), and a right peripheral monocular field (2DR), respectively, when the content is presented in a plane of focalization with the respective left eye and right eye viewpoints of the viewer, the adjustable left and right viewpoint lenses being configured to enable interpupillary alignment, stereoscopic fusion and perception of the content presented in the left and right binocular stereo fields as a central binocular stereo field of three dimensional content (3D), the adjustable left and right occluding apertures being configured to enable the right binocular stereo field and the right peripheral monocular field to be occluded from the left eye viewpoint and the left binocular stereo field and the left peripheral monocular field to be occluded from the right eye viewpoint, respectively, and the adjustable left and right occluding apertures being movable in a common plane in close proximity to the user's eyes, to enable the occluding edges of the apertures to softly blur and optically blend the perception of the bordering edges of the fused central binocular field (3D) with the perception of the left (2DL) and right (2DR) peripheral monocular fields, so that the perception of the immersive stereographic content (1V) conveyed by the viewer includes a central binocular field of fused stereoscopic three dimensional content (3D) seamlessly blended with and interposed between left (2DL) and right (2DR) peripheral monocular fields of two dimensional content.

2. The device of claim 1, whereby the adjustable left and right viewpoint lenses (4, 4E, 4J, 4R) and respective occluding apertures (6A, 6E, 6N) are configured to enable independent adjustment relative to each other.

3. The device of claim 1, whereby the adjustable left and right viewpoint lenses (4N, 4V, 4L, 3L, 7L) are configured to be integral with the respective left and right occluding apertures (6L, 6N, 6K, 3N, 7N) so that adjustment of the lenses also determines adjustment of the occluding apertures.

4. The device of claim 3, whereby the function of adjustment is **characterized by** synchronized equidistant movement of the left viewpoint lens and integral occluding aperture towards or away from the right viewpoint lens and integral occluding aperture.

5. The device of claim 4, whereby the function of adjustment is enabled with a pivotal arm (6I, 7R) positioned by a fulcrum (6W, 7P) with one end of the pivotal arm pivotally attached to the left viewpoint lens and integral occluding aperture, and the other end of the pivotal arm pivotally attached to the right viewpoint lens and integral occluding aperture, the axis of the fulcrum (6W, 7P) and the axes of the pivotal ends (6T, 6V, 7M, 7N) of the pivotal arm (6I,7R) being generally perpendicular to a plane common to the left and right viewpoint lenses.

6. The device of claim 4, whereby the function of adjustment is enabled by rotational movement of a pinion gear (3G) meshed with two opposing linear gears (3T, 3Z), each of which slide on a line parallel to a line which bisects the left and right viewpoint lenses (3L), one of the linear gears (3Z) being attached to the left viewpoint lens and integral occluding aperture, the other linear gear (3T) being attached to the right viewpoint lens and integral occluding aperture; the axis of the pinion gear (3H) being generally perpendicular to a plane common to the left and right viewpoint lenses.

7. The device of claim 1, whereby the viewer is configured as a hybrid stereographic book (70, 16) having a content support portion (8Q) and a chassis (3I) to couple the content support portion to the viewer; the content support portion being configured to support a multiple paged content packet (7Y) having an axis (7W) to enable a plurality of pages to be pivotable, the page axis (7W) being parallel to a line which bisects the left and right lenses, the pages having immersive stereographic content (7X) thereon; the content support portion and chassis being configured to enable the viewer to be maintained in alignment with the content during viewing and pivoting of multiple pages of content.

8. The device of claim 7, whereby the plurality of pivotable pages, each having first (1D) and second (1E) opposite surfaces provided with stereographic content, the upright direction of the content oriented towards the pivotal axis of the pages (2P), the axis and pages being configured for releasable attachment (8A) to the content support portion (8), so that the upright content of the first surfaces can be oriented, positioned, viewed with the viewer, released, reoriented, and repositioned to enable the upright content of the second opposite surfaces to be viewable with the viewer.

## Patentansprüche

1. Stereografisches Betrachtungsgerät, das Folgendes umfasst: eine stereoskopische Betrachtungsbrille (5, 5D, 5M, 5Q, 5U, 7Q), die so konfiguriert ist, dass sie eine interokulare Justage ermöglicht, mit justierbaren rechten und linken Blickpunktlinsen (4, 4E, 4J, 4R, 4N, 4V, 4L, 3L, 7L) und justierbaren rechten und linken Blickpunktabdeckblenden (6A, 6E, 6L, 6N, 6R, 6K, 3N, 7I), jeweils separat von den Blickpunktlinsen, wobei die Linsen und Blenden zum Betrachten von immersivem stereografischem Inhalt mit einem Format (1V) konfiguriert sind, das den Inhalt in vier Sichtfeldern präsentiert, nämlich jeweils einem linken peripheren monokularen Feld (2DL), einem linken binokularen Stereofeld (2L), einem rechten binokularen Stereofeld (2R) und einem rechten peripheren monokularen Feld (2DR), wenn der Inhalt in einer Fokalisierungsebene mit den jeweiligen Blickpunkten des linken und des rechten Auges der Betrachtungsbrille präsentiert wird, wobei die justierbaren linken und rechten Blickpunktlinsen so konfiguriert sind, dass sie eine interpupillare Ausrichtung, stereoskopische Fusion und Wahrnehmung des im linken und im rechten binokularen Stereofeld als ein zentrales binokulares Stereofeld von dreidimensionalem (3D) Inhalt ermöglichen, wobei die justierbaren linken und rechten Abdeckblenden so konfiguriert sind, dass sie ein Abdecken des rechten binokularen Stereofeldes und des rechten peripheren monokularen Feldes vom Blickpunkt des linken Auges und ein Abdecken des linken binokularen Stereofeldes und des linken peripheren monokularen Feldes vom Blickpunkt des rechten Auges ermöglichen, und wobei die justierbaren linken und rechten Abdeckblenden in einer gemeinsamen Ebene nahe an den Augen des Benutzers beweglich sind, um es zu ermöglichen, dass die Abdeckränder der Blenden die Wahrnehmung der Begrenzungsränder des vereinigten zentralen binokularen Feldes (3D) mit der Wahrnehmung des linken (2DL) und des rechten (2DR) peripheren monokularen Feldes leicht verschwimmen lassen und optisch vermischen, so dass die Wahrnehmung des von der Betrachtungsbrille übertragenen immersiven stereografischen Inhalts (1V) ein zentrales binokulares Feld von vereinigtem stereoskopischem dreidimensionalem (3D) Inhalt beinhaltet, der sich nahtlos mit dem linken (2DL) und dem rechten (2DR) peripheren monokularen Feld von zweidimensionalem Inhalt vermischt und sich dazwischen befindet.

2. Gerät nach Anspruch 1, bei dem die justierbaren linken und rechten Blickpunktlinsen (4, 4E, 4J, 4R) und die jeweiligen Abdeckblende (6A, 6E, 6N) so konfiguriert sind, dass sie unabhängig voneinander justiert werden können.

3. Gerät nach Anspruch 1, bei dem die justierbaren linken und rechten Blickpunktlinsen (4N, 4V, 4L, 3L, 7L) so konfiguriert sind, dass sie mit den jeweiligen linken und rechten Abdeckblenden (6L, 6N, 6K, 3N, 7N) integral sind, so dass eine Justage der Linsen auch die Justage der Abdeckblenden bestimmt.

4. Gerät nach Anspruch 3, bei dem die Justierfunktion durch eine synchronisierte äquidistante Bewegung der linken Blickpunktlinse und der integralen Abdeckblenden zur rechten Blickpunktlinse und integralen Abdeckblenden hin oder davon weg **gekennzeichnet** ist.

5. Gerät nach Anspruch 4, bei dem die Justierfunktion mit einem Schwenkarm (61, 7R) ermöglicht wird, der von einem Drehpunkt (6W, 7P) positioniert wird, wobei ein Ende des Schwenkarms drehbar an der linken Blickpunktlinse und integralen Abdeckblende angebracht ist und das andere Ende des Schwenkarms drehbar an der rechten Blickpunktlinse und integralen Abdeckblenden angebracht ist, wobei die Achse des Drehpunkts (6W, 7P) und die Achsen der schwenkbaren Enden (6T, 6V, 7M, 7N) des Schwenkarms (6I, 7R) allgemein lotrecht zu einer gemeinsamen Ebene der linken und rechten Blickpunktlinse sind.

6. Gerät nach Anspruch 4, bei dem die Justierfunktion durch eine Drehbewegung eines Zahntriebwerks (3G) ermöglicht wird, das mit zwei entgegengesetzten Zahnstangen (3T, 3Z) kämmt, von denen jede auf einer Linie parallel zu einer Linie gleitet, die die linke und rechte Blickpunktlinse (3L) halbiert, wobei eine der Zahnstangen (3Z) an der linken Blickpunktlinse und integralen Abdeckblende und die andere Zahnstange (3T) an der rechten Blickpunktlinse und integralen Abdeckblende angebracht ist; wobei die Achse des Zahntriebwerks (3H) allgemein lotrecht zu einer gemeinsamen Ebene der linken und rechten Blickpunktlinse ist.

7. Gerät nach Anspruch 1, bei dem die Betrachtungsbrille als hybrides stereografisches Buch (70, 16) mit einem Inhaltsteil (8Q) und einem Gestell (3I) konfiguriert ist, um den Inhaltsteil mit der Betrachtungsbrille zu verbinden; wobei der Inhaltsteil so konfiguriert ist, dass er ein mehrseitiges Inhaltspaket (7Y) mit einer Achse (7W) trägt, so dass mehrere Seiten gedreht werden können, wobei die Seitenachse (7W) parallel zu einer Linie ist, die die linke und rechte Linse" halbiert, wobei sich auf den Seiten immersiver stereografischer Inhalt (7X) befindet; wobei der Inhaltsteil und das Gestell so konfiguriert sind, dass sie es ermöglichen, dass die Betrachtungsbrille in Ausrichtung mit dem. Inhalt beim Betrachten und Drehen mehrerer Inhaltsseiten gehalten wird.

8. Gerät nach Anspruch 7, bei dem die mehreren drehbaren Seiten jeweils erste (1D) und zweite (1E) gegenüberliegende Flächen mit stereografischem Inhalt haben, wobei die aufrechte Richtung des Inhalts in Richtung auf die Drehachse der Seiten (2P) orientiert ist, wobei die Achse und die Seiten zum lösbaren Anbringen (8A) am Inhaltsteil (8) konfiguriert sind, so dass der aufrechte Inhalt der ersten Flächen orientiert; positioniert, mit dem Betrachtungsgerät betrachtet, gelöst, neu orientiert und umpositioniert werden kann, damit der aufrechte Inhalt der zweiten gegenüberliegenden Flächen mit dem Betrachtungsgerät betrachtet werden kann.

## Revendications

1. Dispositif de visionnement stéréographique comprenant une visionneuse stéréoscopique (5, 5D, 5M, 5Q, 5U, 7Q) configuré pour permettre un réglage interoculaire, comportant des lentilles à point de visée gauche et droite réglables (4, 4E, 4J, 4R, 4N, 4V, 4L, 3L, 7L) et des orifices obturateurs de point de visée gauche et droit réglables (6A, 6E, 6L, 6N, 6R, 6K, 3N, 7I), séparés des lentilles à point de visée, respectivement, les lentilles et orifices étant configurés pour visionner un contenu stéréographique immersif ayant un format (1V) qui présente le contenu dans quatre champs visuels, dont un champ monoculaire périphérique gauche (2DL), un champ stéréo binoculaire gauche (2L), un champ stéréo binoculaire droit (2R), et un champ monoculaire périphérique droit (2DR), respectivement, quand le contenu est présenté dans un plan de focalisation avec les points de visée de l'oeil gauche et de l'oeil droite respectifs de la visionneuse, les lentilles à point de visée gauche et droite réglables étant configurées pour permettre l'alignement interpupillaire, la fusion stéréoscopique et la perception du contenu présenté dans les champs stéréo binoculaires gauche et droit sous forme de champ stéréo binoculaire central de contenu tridimensionnel (3D), les orifices obturateurs gauche et droit réglables étant configurés pour permettre d'occulter le champ stéréo binoculaire droit et le champ monoculaire périphérique droit du point de visée de l'oeil gauche et d'occulter le champ stéréo binoculaire gauche et le champ monoculaire périphérique gauche du point de visée de l'oeil droit, respectivement, et les orifices obturateurs gauche et droit réglables étant déplaçables dans un plan commun à proximité des yeux de l'utilisateur, afin de permettre aux bords obturateurs des orifices de devenir lentement flous et de mélanger optiquement la perception des bords périphériques du champ binoculaire central fusionné (3D) avec la perception des champs monoculaires périphériques gauche (2DL) et droit (2DR), de telle sorte que la perception du contenu stéréographique immersif (1V) communiquée par la visionneuse comporte un champ binoculaire central d'un contenu tridimensionnel stéréoscopique fusionné (3D) mélangé de façon transparente avec les champs monoculaires périphériques gauche (2DL) et droit (2DR) de contenu bidimensionnel et interposé entre ceux-ci.

2. Dispositif selon la revendication 1, selon lequel les lentilles à point de visée gauche et droite réglables (4, 4E, 4J, 4R) et orifices obturateurs respectifs (6A, 6E, 6N) sont configurés pour permettre un réglage indépendant les unes des autres.

3. Dispositif selon la revendication 1, selon lequel les lentilles à point de visée gauche et droite réglables (4N, 4V, 4L, 3L, 7L) sont configurées pour faire partie intégrante des orifices obturateurs gauche et droit respectifs (6L, 6N, 6K, 3N, 7N) de telle sorte que le réglage des lentilles détermine également le réglage des orifices obturateurs.

4. Dispositif selon la revendication 3, selon lequel la fonction de réglage est déterminée par un mouvement équidistant synchronisé des lentille à point de visée et orifice obturateur intégré gauches dans un sens de rapprochement ou d'éloignement des lentille à point de visée et orifice obturateur intégré droits.

5. Dispositif selon la revendication 4, selon lequel la fonction de réglage est activée avec un bras pivotant (6I, 7R) positionné par un point d'appui (6W, 7P), une extrémité du bras pivotant étant fixée de manière pivotante aux lentille à point de visée et orifice obturateur intégré gauches, et l'autre extrémité du bras pivotant étant fixée de façon pivotante aux lentille à point de visée et orifice obturateur intégré droits, l'axe du point d'appui (6W, 7P) et les axes des extrémités pivotantes (6T, 6V, 7M, 7N) du bras pivotant (6I, 7R) étant généralement perpendiculaires à un plan commun aux lentilles à point de visée gauche et droite.

6. Dispositif selon la revendication 4, selon lequel la fonction de réglage est activée par un mouvement rotationnel d'un pignon (3F) engrené avec deux roues dentées linéaires opposées (3T, 3Z), lesquelles coulissent chacune sur une ligne parallèle à une ligne qui bissecte les lentilles à point de visée gauche et droite (3L), l'une des roues dentées linéaires (3z) étant fixée aux lentille à point de visée et orifice obturateur intégré gauches, l'autre roue dentée linéaire (3T) étant fixée aux lentille à point de visée et orifice obturateur intégré droits, l'axe du pignon (3H) étant généralement perpendiculaire à un plan commun aux lentilles à point de visée gauche et droite.

7. Dispositif selon la revendication 1, selon lequel la visionneuse est configurée sous forme de livre stéréographique hybride (70, 16) ayant une partie de support de contenu (8Q) et un châssis (3I) afin de coupler la partie de support de contenu à la visionneuse, la partie de support de contenu étant configurée pour supporter un paquet de contenu à pages multiples (7Y) ayant un axe (7W) permettant de faire pivoter la pluralité de pages, l'axe de pages (7W) étant parallèle à une ligne qui bissecte les lentilles gauche et droite, les pages ayant un contenu stéréographique immersif (7X) ; la partie de support de contenu et le châssis étant configurés pour permettre de maintenir la visionneuse alignée avec le contenu durant le visionnement et le pivotement de multiples pages de contenu.

8. Dispositif selon la revendication 7, selon lequel la pluralité de pages pivotantes, chacune ayant des première (1D) et seconde (1E) surfaces opposées dotées d'un contenu stéréographique, le sens droit du contenu orienté vers l'axe pivot des pages (2P), l'axe et les pages étant configurés pour la fixation détachable (8A) à la partie de support de contenu (8), de telle sorte que le contenu droit des premières surfaces puisse être orienté, positionné, visionné avec la visionneuse, libéré, réorienté, et repositionné pour permette le visionnement du contenu droit des secondes surfaces opposées avec la visionneuse.
